# EUROPEAN PATENT APPLICATION

(11) **EP 4 401 326 A1**
(43) Date of publication of application: **17.07.2024**
(21) Application number: 23214252.1
(22) Date of filing: 05.12.2023
(51) Int. Cl.: H04B 3/00, B63H 21/22, F02D 11/10

(54) **COMMUNICATION SYSTEM FOR OUTBOARD MOTOR DRIVE**

(30) Priority: 13.01.2023 JP 2023003874
(71) Applicant: Yamaha Hatsudoki Kabushiki Kaisha, Iwata-shi, Shizuoka-ken 438-8501 (JP)
(72) Inventor: Nogami, Tatsuhiko, Iwata-shi, Shizuoka-ken, 438-8501 (JP)
(74) Representative: Grünecker Patent- und Rechtsanwälte PartG mbB

(57) **Abstract**

A communication system (102) for outboard motor drive includes a main bus line (3, 103) including two signal lines (30) configured to transmit data using a voltage difference between the two signal lines, and configured to communicate with an outboard motor (1), an in-hull maneuvering controller (102a) provided at a first end (3a) of the main bus line in a hull (101), a first terminating resistor (2a) provided in the in-hull maneuvering controller and configured to electrically connect the two signal lines, and a second terminating resistor (2b) provided at a second end (3b) of the main bus line and configured to electrically connect the two signal lines. The main bus line is connected to the second terminating resistor provided in the hull by passing through the outboard motor from a side of the first terminating resistor and making a U-turn.

## Description

The present invention relates to a communication system for outboard motor drive.

A communication system for outboard motor drive including a bus line that includes two signal lines to transmit data between an in-hull maneuvering controller in a hull and an outboard motor using a voltage difference between the two signal lines is known in general. Such a communication system for outboard motor drive is disclosed in JP 2007-309294 A, for example.

JP 2007-309294 A discloses an outboard motor operation system for a marine vessel including a CAN cable that includes a high-level signal line and a low-level signal line. The outboard motor operation system further includes one outboard motor and a remote control ECU in a hull, and transmits data between the outboard motor and the remote control ECU via the CAN cable. A first end of the CAN cable is located in the hull, and a terminating resistor is provided at the first end to reduce noise that is a reflected wave. A second end of the CAN cable is located inside the outboard motor, and a terminating resistor is provided at the second end to reduce noise that is a reflected wave.

Although not clearly described in JP 2007-309294 A, in the field of outboard motor operation systems described in JP 2007-309294 A, a system to operate a plurality of outboard motors may be constructed using outboard motors including terminating resistors as described above. In such a case, it is necessary to connect the plurality of outboard motors by a CAN cable and then carry out wiring such that only one of the terminating resistors in the plurality of outboard motors is functional. In such a case, an unused (wasted) terminating resistor is generated among the terminating resistors located in the outboard motors, and thus an improvement is desired.

It is an object of the present invention to provide a communication system for outboard motor drive that prevents generation of an unused terminating resistor. According to the present invention, said object is solved by a communication system for outboard motor drive having the features of independent claim 1. Preferred embodiments are laid down in the dependent claims.

A communication system for outboard motor drive according to a preferred embodiment includes a main bus line including two signal lines configured to transmit data using a voltage difference between the two signal lines, and configured to communicate with an outboard motor, an in-hull maneuvering controller provided at a first end of the main bus line in a hull, a first terminating resistor provided in the in-hull maneuvering controller and configured to electrically connect the two signal lines, and a second terminating resistor provided at a second end of the main bus line and configured to electrically connect the two signal lines. The main bus line is connected to the second terminating resistor provided in the hull by passing through the outboard motor from a side of the first terminating resistor and making a U-turn.

A communication system for outboard motor drive according to a preferred embodiment includes the first terminating resistor in the in-hull maneuvering controller to electrically connect the two signal lines, and the second terminating resistor at the second end of the main bus line to electrically connect the two signal lines, and the main bus line is connected to the second terminating resistor in the hull by passing through the outboard motor from the side of the first terminating resistor and making a U-turn. Accordingly, the main bus line makes a U-turn, and thus the main bus line is returned into the hull after passing through the outboard motor such that both ends of the main bus line are located in the hull. Therefore, the two terminating resistors, the first terminating resistor and the second terminating resistor, are located in the hull such that the terminating resistors are removed from inside the outboard motor. Thus, the number of terminating resistors does not vary depending on the number of outboard motors unlike the conventional case, and the number of terminating resistors in the communication system is minimized. Consequently, generation of an unused terminating resistor is prevented.

A communication system for outboard motor drive according to a preferred embodiment preferably further includes an in-outboard motor controller configured or programmed to control driving of the outboard motor, and a stub line connected to the in-outboard motor controller. The main bus line preferably includes a U-turn line that is a folded portion configured to make a U-turn outside the hull and is connected to the in-outboard motor controller via the stub line. Accordingly, the stub line and the U-turn line facilitate communication between the in-hull maneuvering controller and the in-outboard motor controller, and the main bus line is easily returned into the hull from inside the outboard motor.

In such a case, the main bus line preferably includes a first end-side line connected to the first terminating resistor in the hull, and a second end-side line connected to the second terminating resistor in the hull, the first end-side line is preferably connected to the second end-side line by the U-turn line configured to make a U-turn outside the hull, and the U-turn line is preferably configured to be attachable to and detachable from the first end-side line and the second end-side line. Accordingly, the U-turn line is attachable to and detachable from the first end-side line and the second end-side line, and thus the lines are easily connected to each other.

In a communication system for outboard motor drive in which the first end-side line is connected to the second end-side line by the U-turn line, the outboard motor preferably includes a first outboard motor including a first in-outboard motor controller as the in-outboard motor controller, and a second outboard motor including a second in-outboard motor controller as the in-outboard motor controller. The stub line preferably includes a first stub line configured to connect the main bus line to the first in-outboard motor controller, and a second stub line configured to connect the main bus line to the second in-outboard motor controller. The U-turn line preferably includes a first U-turn line connected to the first in-outboard motor controller via the first stub line and connected to the first end-side line, and a second U-turn line connected to the second in-outboard motor controller via the second stub line and connected to the second end-side line. The main bus line preferably further includes a connection line configured to connect the first U-turn line to the second U-turn line. Accordingly, the first stub line, the second stub line, the first U-turn line, and the second U-turn line facilitate communication between the in-hull maneuvering controller, the first in-outboard motor controller, and the second in-outboard motor controller, and the main bus line is easily returned into the hull from inside the outboard motor.

In a communication system for outboard motor drive in which the stub line includes the first stub line and the second stub line, and the U-turn line includes the first U-turn line and the second U-turn line, the first U-turn line and the first stub line are preferably located inside the first outboard motor, and the second U-turn line and the second stub line are preferably located inside the second outboard motor. Accordingly, the first U-turn line and the first stub line are housed in the first outboard motor, and the second U-turn line and the second stub line are housed in the second outboard motor, and thus complex wiring outside the outboard motor is reduced or prevented.

In a communication system for outboard motor drive in which the stub line includes the first stub line and the second stub line, and the U-turn line includes the first U-turn line and the second U-turn line, the first U-turn line and the second U-turn line, each of which is a portion of the main bus line, preferably have the same structure as each other. Accordingly, the first U-turn line in the first outboard motor and the second U-turn line in the second outboard motor have the same structure as each other, and thus even when the positions of the first outboard motor and the second outboard motor are swapped or the positions of the first U-turn line and the second U-turn line are swapped, the in-hull maneuvering controller, the first in-outboard motor controller, and the second in-outboard motor controller are communicably connected to each other.

A communication system for outboard motor drive in which the first end-side line is connected to the second end-side line by the U-turn line preferably further includes a first connector configured to detachably connect the U-turn line to the first end-side line and the second end-side line. Accordingly, the U-turn line is easily connected to the first end-side line by the first connector.

In such a case, the first connector is preferably integral and unitary with the outboard motor. Accordingly, the number of divisible components in the system is reduced such that the system structure is simplified.

In a communication system for outboard motor drive including the first connector, the first end-side line preferably includes a first line provided closer to the first terminating resistor, and a second line provided closer to the first connector, and the communication system for outboard motor drive preferably further comprises a second connector configured to detachably connect the first line to the second line in the hull. Accordingly, the first end-side line is shortened by being divided into two portions, the first line and the second line, and thus the first end-side line is easily routed without tangling. Furthermore, the first line is easily connected to the second line by the second connector.

In a communication system for outboard motor drive according to a preferred embodiment, the two signal lines of the main bus line preferably include a high bus line configured to be at a high voltage during data transmission, and a low bus line configured to be at a low voltage during data transmission, and the main bus line is preferably based on a CAN communication standard and is preferably configured to transmit data based on a voltage difference between the high bus line and the low bus line. Accordingly, in the communication system for outboard motor drive based on the CAN communication standard, generation of an unused termination resistor is prevented.

In such a case, the high bus line and the low bus line of the main bus line are preferably twisted together and are preferably configured to connect the first terminating resistor to the second terminating resistor. Accordingly, the high bus line and the low bus line are a so-called twisted cable, and thus noise during data transmission is reduced.

The above and other elements, features, steps, characteristics and advantages of preferred embodiments will become more apparent from the following detailed description of the preferred embodiments with reference to the attached drawings.

### BRIEF DESCRIPTION OF THE DRAWINGS

FIG. 1 is a diagram schematically showing a marine vessel including a communication system for outboard motor drive according to a preferred embodiment.
FIG. 2 is a side view showing an outboard motor of a communication system for outboard motor drive according to a preferred embodiment.
FIG. 3 is a diagram schematically showing a system structure of a communication system for outboard motor drive according to a preferred embodiment.
FIG. 4 is a diagram schematically showing a state in which a communication system for outboard motor drive according to a preferred embodiment has been changed from a system including two outboard motors to a system including one outboard motor.

### DETAILED DESCRIPTION OF THE PREFERRED EMBODIMENTS

Preferred embodiments are hereinafter described with reference to the drawings.

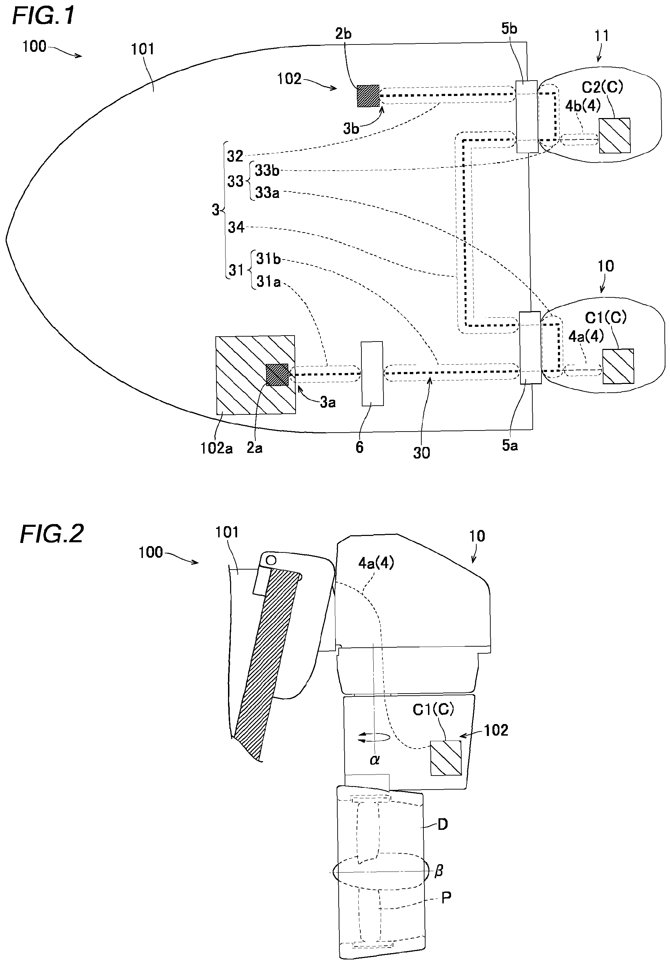

The structure of a marine vessel 100 including a communication system 102 for outboard motor drive according to preferred embodiments is now described with reference to FIGS. 1 to 4. The communication system 102 for outboard motor drive is an example of a "communication system for propulsion device drive".

As shown in FIGS. 1 and 2, the marine vessel 100 includes a hull 101 and the communication system 102 for outboard motor drive mounted on the hull 101. The communication system 102 for outboard motor drive includes an outboard motor 1 on the hull 101. The outboard motor 1 is an example of a "marine propulsion device".

The outboard motor 1 is attached to a transom of the hull 101. The outboard motor 1 includes a first outboard motor 10 and a second outboard motor 11. The first outboard motor 10 and the second outboard motor 11 are aligned side by side along a right-left direction of the hull 101. The first outboard motor 10 and the second outboard motor 11 have the same structure as each other. Therefore, the first outboard motor 10 is described below.

The first outboard motor 10 shown in FIG. 2 is an electric propulsion device in which a propeller P is driven by an electric motor. The first outboard motor 10 is a duct-driven propulsion device in which the electric motor is integral and unitary with a duct D and the propeller P. The first outboard motor 10 rotates the duct D and the propeller P in the right-left direction by a steering mechanism (not shown) about a central axis a. The propeller P rotates about a central axis β.

Each of the first outboard motor 10 and the second outboard motor 11 includes an in-outboard motor controller C that controls driving of the electric motor, for example, that is a drive source of the propeller P.

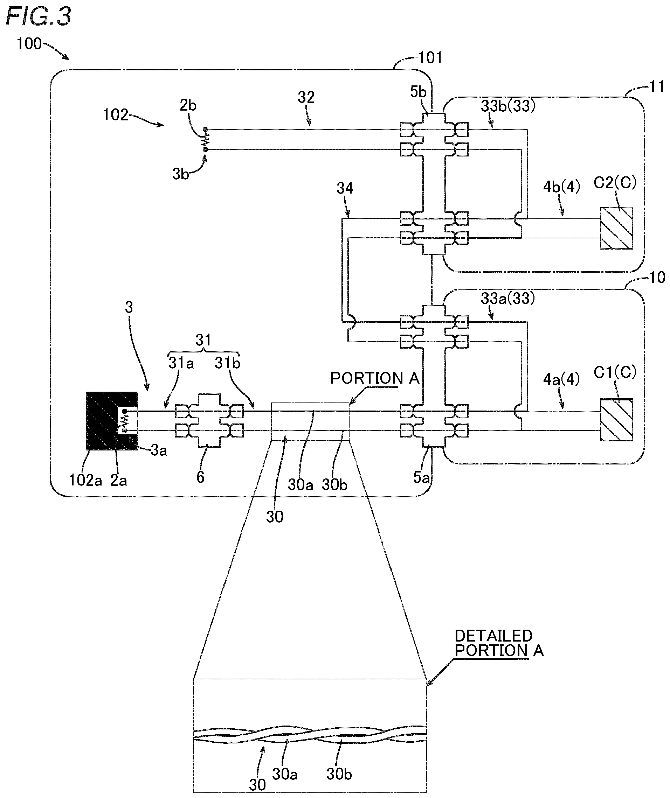

As shown in FIGS. 1 and 3, the communication system 102 for outboard motor drive includes an in-hull maneuvering controller 102a, a first terminating resistor 2a, a second terminating resistor 2b, a main bus line 3, a stub line 4 connected to the in-hull maneuvering controller 102a, first connectors 5a and 5b, and a second connector 6.

The main bus line 3 includes two signal lines 30 to transmit data using a voltage difference between the two signal lines 30. The main bus line 3 is provided to communicate with the outboard motor 1 (the first outboard motor 10 and the second outboard motor 11).

Specifically, the two signal lines 30 of the main bus line 3 include a high bus line 30a that is at a high voltage during data transmission, and a low bus line 30b that is at a low voltage during data transmission. The main bus line 3 is based on a CAN (controller area network) communication standard and transmits data based on a voltage difference between the high bus line 30a and the low bus line 30b.

That is, the communication system 102 for outboard motor drive employs a so-called two-wire differential voltage system. In the two-wire differential voltage system, the same noise is generated on the high bus line 30a and the low bus line 30b at the same time, and thus the noise does not affect the voltage difference (transmitted data) between the high bus line 30a and the low bus line 30b. Therefore, the two-wire differential voltage system is a communication system with high noise resistance.

The high bus line 30a and the low bus line 30b of the main bus line 3 have substantially the same lengths. The high bus line 30a and the low bus line 30b of the main bus line 3 are provided in parallel to each other. The high bus line 30a and the low bus line 30b of the main bus line 3 are twisted together and connect the first terminating resistor 2a to the second terminating resistor 2b.

The in-hull maneuvering controller 102a is located at a first end 3a of the main bus line 3 in the hull 101. The in-hull maneuvering controller 102a controls driving of the outboard motor 1 (the first outboard motor 10 and the second outboard motor 11). The in-hull maneuvering controller 102a includes a CPU and a memory.

As an example, the in-hull maneuvering controller 102a includes a so-called boat control unit to adjust driving of the first outboard motor 10 and the second outboard motor 11 to perform automatic marine vessel maneuvering. In addition, the in-hull maneuvering controller may include a master remote control ECU of remote control ECUs provided one for each outboard motor, for example.

The in-outboard motor controller C includes a first in-outboard motor controller C1 and a second in-outboard motor controller C2. The first outboard motor 10 includes the first in-outboard motor controller C1. The second outboard motor 11 includes the second in-outboard motor controller C2. The first in-outboard motor controller C1 and the second in-outboard motor controller C2 have the same structure as each other. Each of the first in-outboard motor controller C1 and the second in-outboard motor controller C2 includes a CPU and a memory.

The first terminating resistor 2a is provided in the in-hull maneuvering controller 102a located at the first end 3a of the main bus line 3. The first terminating resistor 2a electrically connects the two signal lines 30 (the high bus line 30a and the low bus line 30b). The first terminating resistor 2a reduces or prevents signal reflection generated at terminations of the high bus line 30a and the low bus line 30b (the first end 3a of the main bus line 3) during data transmission. In short, the first terminating resistor 2a reduces or prevents noise by consuming reflected energy that causes noise.

The second terminating resistor 2b is provided at a second end 3b of the main bus line 3. The second terminating resistor 2b electrically connects the two signal lines 30 (the high bus line 30a and the low bus line 30b). The second terminating resistor 2b reduces or prevents signal reflection generated at terminations of the high bus line 30a and the low bus line 30b (the second end 3b of the main bus line 3) during data transmission. In short, the second terminating resistor 2b reduces or prevents noise by consuming reflected energy that causes noise.

The communication system 102 for outboard motor drive includes only two terminating resistors, the first terminating resistor 2a and the second terminating resistor 2b.

The main bus line 3 is connected to the second terminating resistor 2b located in the hull 101 by passing through the outboard motor 1 from the first terminating resistor 2a side and making a U-turn. Specifically, the main bus line 3 includes a U-turn line 33 that is a folded portion that makes a U-turn outside the hull 101 and is connected to the in-outboard motor controller C via the stub line 4.

The main bus line 3 includes a first end-side line 31 connected to the first terminating resistor 2a in the hull 101, and a second end-side line 32 connected to the second terminating resistor 2b in the hull 101.

The U-turn line 33 includes a first U-turn line 33a and a second U-turn line 33b. In the main bus line 3, the first end-side line 31 is connected to the second end-side line 32 by the U-turn line 33 that makes a U-turn outside the hull 101. The outside of the hull 101 in which the U-turn line 33 makes a U-turn corresponds to the inside of the first outboard motor 10 and the inside of the second outboard motor 11.

The stub line 4 includes a first stub line 4a and a second stub line 4b. The first stub line 4a connects the main bus line 3 to the first in-outboard motor controller C1. The second stub line 4b connects the main bus line 3 to the second in-outboard motor controller C2.

The first U-turn line 33a is connected to the first in-outboard motor controller C1 via the first stub line 4a, and is connected to the first end-side line 31. The second U-turn line 33b is connected to the second in-outboard motor controller C2 via the second stub line 4b, and is connected to the second end-side line 32. The first U-turn line 33a and the second U-turn line 33b, each of which is a portion of the main bus line 3, have the same structure as each other.

The main bus line 3 includes a connection line 34. The connection line 34 connects the first U-turn line 33a to the second U-turn line 33b outside the outboard motor 1 (between the first outboard motor 10 and the second outboard motor 11).

Each of the first end-side line 31, the second end-side line 32, the first U-turn line 33a, the second U-turn line 33b, and the connection line 34 includes the high bus line 30a and the low bus line 30b in parallel to each other.

The U-turn line 33 of the main bus line 3 is attachable to and detachable from the first end-side line 31 and the second end-side line 32. The first connectors 5a and 5b are used to attach and detach the U-turn line 33 to and from the first end-side line 31 and the second end-side line 32.

The first U-turn line 33a and the first stub line 4a are located inside the first outboard motor 10. The second U-turn line 33b and the second stub line 4b are located inside the second outboard motor 11.

The first connector 5a is integral and unitary with the first outboard motor 10. The first connector 5b is integral and unitary with the second outboard motor 11. The first connectors 5a and 5b detachably connect the U-turn line 33 to the first end-side line 31 and the second end-side line 32.

Specifically, the first connector 5a connects the first U-turn line 33a to the first end-side line 31. Thus, the first U-turn line 33a and the first end-side line 31 are electrically connected to each other via the first connector 5a. The first connector 5b connects the second U-turn line 33b to the second end-side line 32. Thus, the second U-turn line 33b and the second end-side line 32 are electrically connected to each other via the first connector 5b.

The first connector 5a connects the first U-turn line 33a to a first end of the connection line 34. Thus, the first U-turn line 33a and the connection line 34 are electrically connected to each other via the first connector 5a. The first connector 5b connects the second U-turn line 33b to a second end of the connection line 34. Thus, the second U-turn line 33b and the connection line 34 are electrically connected to each other via the first connector 5b.

Therefore, the first end-side line 31 and the second end-side line 32 are electrically connected to each other via the first connector 5a, the first U-turn line 33a, the connection line 34, the first connector 5b, and the second U-turn line 33b.

The first end-side line 31 includes a first line 31a closer to the first terminating resistor 2a and a second line 31b closer to the first connectors 5a and 5b. The second connector 6 detachably connects the first line 31a to the second line 31b in the hull 101.

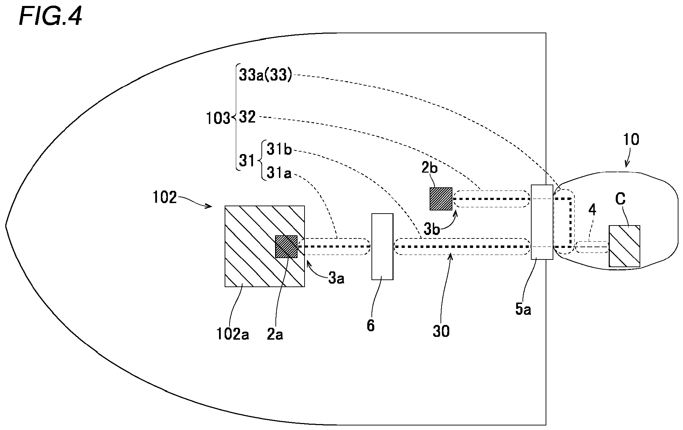

As shown in FIG. 4, the communication system 102 for outboard motor drive is easily changed from a system including two outboard motors to a system including one outboard motor by rearranging the system components.

Specifically, the second end-side line 32 is detached from the first connector 5b, and the connection line 34 is detached from the first connector 5a. Then, the second end-side line 32 is connected to a position of the first connector 5a to which the connection line 34 used to be connected. Consequently, the communication system 102 for outboard motor drive is changed from a system including two outboard motors to a system including one outboard motor. In such a case, a main bus line 103 includes the first end-side line 31, the first U-turn line 33a, and the second end-side line 32.

Furthermore, the communication system 102 for outboard motor drive is easily changed from a system including two outboard motors to a system including three or more outboard motors by rearranging the system components.

According to the various preferred embodiments described above, the following advantageous effects are achieved.

According to a preferred embodiment, the communication system 102 for outboard motor drive includes the first terminating resistor 2a in the in-hull maneuvering controller 102a to electrically connect the two signal lines 30, and the second terminating resistor 2b at the second end 3b of the main bus line 3 to electrically connect the two signal lines 30, and the main bus line 3 is connected to the second terminating resistor 2b in the hull 101 by passing through the outboard motor 1 from the first terminating resistor 2a side and making a U-turn. Accordingly, the main bus line 3 makes a U-turn, and thus the main bus line 3 is returned into the hull 101 after passing through the outboard motor 1 such that both ends of the main bus line 3 are located in the hull 101. Therefore, the two terminating resistors, the first terminating resistor 2a and the second terminating resistor 2b, are located in the hull 101 such that the terminating resistors are removed from inside the outboard motor 1. Thus, the number of terminating resistors does not vary depending on the number of outboard motors 1 unlike the conventional case, and the number of terminating resistors in the communication system is minimized. Consequently, generation of an unused terminating resistor is prevented.

According to a preferred embodiment, the communication system 102 for outboard motor drive further includes the in-outboard motor controller C configured or programmed to control driving of the outboard motor 1, and the stub line 4 connected to the in-outboard motor controller C, and the main bus line 3 includes the U-turn line 33 that is the folded portion that makes a U-turn outside the hull 101 and is connected to the in-outboard motor controller C via the stub line 4. Accordingly, the stub line 4 and the U-turn line 33 facilitate communication between the in-hull maneuvering controller 102a and the in-outboard motor controller C, and the main bus line 3 is easily returned into the hull 101 from inside the outboard motor 1.

According to a preferred embodiment, the main bus line 3 includes the first end-side line 31 connected to the first terminating resistor 2a in the hull 101, and the second end-side line 32 connected to the second terminating resistor 2b in the hull 101, and the first end-side line 31 is connected to the second end-side line 32 by the U-turn line 33 that makes a U-turn outside the hull 101. Furthermore, the U-turn line 33 is attachable to and detachable from the first end-side line 31 and the second end-side line 32. Accordingly, the U-turn line 33 is attachable to and detachable from the first end-side line 31 and the second end-side line 32, and thus the lines are easily connected to each other.

According to a preferred embodiment, the outboard motor 1 includes the first outboard motor 10 including the first in-outboard motor controller C1 as the in-outboard motor controller C, and the second outboard motor 11 including the second in-outboard motor controller C2 as the in-outboard motor controller C. The stub line 4 includes the first stub line 4a to connect the main bus line 3 to the first in-outboard motor controller C1, and the second stub line 4b to connect the main bus line 3 to the second in-outboard motor controller C2. The U-turn line 33 includes the first U-turn line 33a connected to the first in-outboard motor controller C1 via the first stub line 4a and connected to the first end-side line 31, and the second U-turn line 33b connected to the second in-outboard motor controller C2 via the second stub line 4b and connected to the second end-side line 32. The main bus line 3 further includes the connection line 34 to connect the first U-turn line 33a to the second U-turn line 33b. Accordingly, the first stub line 4a, the second stub line 4b, the first U-turn line 33a, and the second U-turn line 33b facilitate communication between the in-hull maneuvering controller 102a, the first in-outboard motor controller C1, and the second in-outboard motor controller C2, and the main bus line 3 is easily returned into the hull 101 from inside the outboard motor 1.

According to a preferred embodiment, the first U-turn line 33a and the first stub line 4a are located inside the first outboard motor 10, and the second U-turn line 33b and the second stub line 4b are located inside the second outboard motor 11. Accordingly, the first U-turn line 33a and the first stub line 4a are housed in the first outboard motor 10, and the second U-turn line 33b and the second stub line 4b are housed in the second outboard motor 11, and thus complex wiring outside the outboard motor 1 is reduced or prevented.

According to a preferred embodiment, the first U-turn line 33a and the second U-turn line 33b, each of which is a portion of the main bus line 3, have the same structure as each other. Accordingly, the first U-turn line 33a in the first outboard motor 10 and the second U-turn line 33b in the second outboard motor 11 have the same structure as each other, and thus even when the positions of the first outboard motor 10 and the second outboard motor 11 are swapped or the positions of the first U-turn line 33a and the second U-turn line 33b are swapped, the in-hull maneuvering controller 102a, the first in-outboard motor controller C1, and the second in-outboard motor controller C2 are communicably connected to each other.

According to a preferred embodiment, the communication system 102 for outboard motor drive further includes the first connectors 5a and 5b to detachably connect the U-turn line 33 to the first end-side line 31 and the second end-side line 32. Accordingly, the U-turn line 33 is easily connected to the first end-side line 31 by the first connectors 5a and 5b.

According to a preferred embodiment, the first connectors 5a and 5b are integral and unitary with the outboard motor 1. Accordingly, the number of divisible components in the system is reduced such that the system structure is simplified.

According to a preferred embodiment, the first end-side line 31 includes the first line 31a closer to the first terminating resistor 2a, and the second line 31b closer to the first connectors 5a and 5b, and the communication system 102 for outboard motor drive further includes the second connector 6 to detachably connect the first line 31a to the second line 31b in the hull 101. Accordingly, the first end-side line 31 is shortened by being divided into two portions, the first line 31a and the second line 31b, and thus the first end-side line 31 is easily routed without tangling. Furthermore, the first line 31a is easily connected to the second line 31b by the second connector 6.

According to a preferred embodiment, the two signal lines 30 of the main bus line 3 include the high bus line 30a that is at a high voltage during data transmission, and the low bus line 30b that is at a low voltage during data transmission, and the main bus line 3 is based on the CAN communication standard and is operable to transmit data based on the voltage difference between the high bus line 30a and the low bus line 30b. Accordingly, in the communication system 102 for outboard motor drive based on the CAN communication standard, generation of an unused termination resistor is prevented.

According to a preferred embodiment, the high bus line 30a and the low bus line 30b of the main bus line 3 are twisted together and are operable to connect the first terminating resistor 2a to the second terminating resistor 2b. Accordingly, the high bus line 30a and the low bus line 30b are a so-called twisted cable, and thus noise during data transmission is reduced.

The preferred embodiments described above are illustrative for present teaching but the present teaching also relates to modifications of the preferred embodiments.

For example, while the marine vessel preferably includes the outboard motor in preferred embodiments described above, the present teaching is not restricted to this. In the present teaching, the marine vessel may alternatively include an inboard-outboard motor, for example, instead of the outboard motor.

While the marine vessel preferably includes one or two outboard motors in preferred embodiments described above, the present teaching is not restricted to this. In the present teaching, the marine vessel may alternatively include three or more outboard motors.

While the outboard motor is preferably electrically driven with an electric motor as a drive source in preferred embodiments described above, the present teaching is not restricted to this. In the present teaching, the outboard motor may alternatively be an engine-driven with an engine as a drive source.

While the marine vessel preferably includes the first connectors in preferred embodiments described above, the present teaching is not restricted to this. In the present teaching, the marine vessel may not include the first connectors.

While the marine vessel preferably includes the second connector in preferred embodiments described above, the present teaching is not restricted to this. In the present teaching, the marine vessel may not include the second connector.

While the main bus line is preferably based on the CAN communication standard and preferably transmits data based on the voltage difference between the high bus line and the low bus line in preferred embodiments described above, the present teaching is not restricted to this. In the present teaching, the main bus line may alternatively be based on a two-wire differential voltage system standard different from the CAN communication standard.

## Claims

1. A communication system (102) for outboard motor drive, the communication system comprising:
a main bus line (3, 103) including two signal lines (30) configured to transmit data using a voltage difference between the two signal lines, and configured to communicate with an outboard motor (1);
an in-hull maneuvering controller (102a) provided at a first end (3a) of the main bus line in a hull (101);
a first terminating resistor (2a) provided in the in-hull maneuvering controller and configured to electrically connect the two signal lines; and
a second terminating resistor (2b) provided at a second end (3b) of the main bus line and configured to electrically connect the two signal lines; wherein
the main bus line is connected to the second terminating resistor provided in the hull by passing through the outboard motor from a side of the first terminating resistor and making a U-turn.

2. The communication system for outboard motor drive according to claim 1, further comprising:
an in-outboard motor controller (C) configured or programmed to control driving of the outboard motor; and
a stub line (4) connected to the in-outboard motor controller; wherein
the main bus line includes a U-turn line (33) that is a folded portion configured to make a U-turn outside the hull and is connected to the in-outboard motor controller via the stub line.

3. The communication system for outboard motor drive according to claim 2, wherein
the main bus line includes a first end-side line (31) connected to the first terminating resistor in the hull, and a second end-side line (32) connected to the second terminating resistor in the hull;
the first end-side line is connected to the second end-side line by the U-turn line configured to make a U-turn outside the hull; and
the U-turn line is configured to be attachable to and detachable from the first end-side line and the second end-side line.

4. The communication system for outboard motor drive according to claim 3, wherein
the outboard motor includes a first outboard motor (10) including a first in-outboard motor controller (C1) as the in-outboard motor controller, and a second outboard motor (11) including a second in-outboard motor controller (C2) as the in-outboard motor controller;
the stub line includes a first stub line (4a) configured to connect the main bus line to the first in-outboard motor controller, and a second stub line (4b) configured to connect the main bus line to the second in-outboard motor controller;
the U-turn line includes a first U-turn line (33a) connected to the first in-outboard motor controller via the first stub line and connected to the first end-side line, and a second U-turn line (33b) connected to the second in-outboard motor controller via the second stub line and connected to the second end-side line; and
the main bus line further includes a connection line (34) configured to connect the first U-turn line to the second U-turn line.

5. The communication system for outboard motor drive according to claim 4, wherein
the first U-turn line and the first stub line are located inside the first outboard motor; and
the second U-turn line and the second stub line are located inside the second outboard motor.

6. The communication system for outboard motor drive according to claim 4, wherein the first U-turn line and the second U-turn line, each of which is a portion of the main bus line, have the same structure as each other.

7. The communication system for outboard motor drive according to claim 3, further comprising:
a first connector (5a, 5b) configured to detachably connect the U-turn line to the first end-side line and the second end-side line.

8. The communication system for outboard motor drive according to claim 7, wherein the first connector is integral and unitary with the outboard motor.

9. The communication system for outboard motor drive according to claim 7, wherein
the first end-side line includes a first line (31a) provided closer to the first terminating resistor, and a second line (31b) provided closer to the first connector; and
the communication system for outboard motor drive further comprises a second connector (6) configured to detachably connect the first line to the second line in the hull.

10. The communication system for outboard motor drive according to claim 1, wherein
the two signal lines of the main bus line include a high bus line (30a) configured to be at a high voltage during data transmission, and a low bus line (30b) configured to be at a low voltage during data transmission; and
the main bus line is based on a CAN communication standard and is configured to transmit data based on a voltage difference between the high bus line and the low bus line.

11. The communication system for outboard motor drive according to claim 10, wherein the high bus line and the low bus line of the main bus line are twisted together and are configured to connect the first terminating resistor to the second terminating resistor.
